# FASCICULE DE BREVET EUROPEEN

(11) **EP 1 048 581 B1**
(45) Date de publication et mention de la délivrance du brevet: **14.09.2005**
(21) Numéro de dépôt: 00400754.8
(22) Date de dépôt: 17.03.2000
(51) Int. Cl.: B65D 35/08, B29C 45/14, B29C 45/36

(54) **Corps creux, tels que tubes pour produits pâteux divers et son procédé de fabrication**
Tubenförmiger Hohlkörper für pastöse Produkte und Herstellungsverfahren
Tube-shaped hollow body for pasty product and method of manufacturing of the same

(30) Priorité: 02.04.1999 FR 9904174
(43) Date de publication de la demande: 02.11.2000
(73) Titulaire: CEP Industrie, 63550 Saint Rémy sur Durolle (FR)
(72) Inventeur: Dambricourt, Géry Bernard Marie Cornil, 63300 Escoutoux (FR)
(74) Mandataire: Berger, Helmut

(56) Documents cités:
- WO-A-92/05024
- DE-A- 19 736 279
- FR-A- 1 066 799
- FR-A- 2 552 703

## Description

La présente invention concerne des corps creux et, de préférence, des corps creux monoblocs réalisés par moulage par injection de matière plastique.

De tels corps creux peuvent être des tubes souples, lesquels sont en général réalisés par assemblage d'une jupe souple extrudée et d'une tête injectée, la tête injectée étant soit surmoulée sur la jupe extrudée soit soudée après injection. De tels tubes souples sont prévus pour contenir des produits pâteux divers, et notamment des produits de pharmacie, des dentifrices, des produits de cosmétologie, des produits alimentaires, des graisses, des colles, etc.

On connaît également des corps creux réalisés de façon monobloc en une seule pièce par injection. De tels corps creux sont en général rigides et sont par exemple prévus pour contenir des mastics souples devant être amenés à sortir du tube à l'aide d'un piston monté à l'arrière du tube. Cependant, de tels corps creux monoblocs peuvent également être souples et présenter la même utilisation que les tubes souples précédents.

La tête du corps creux est munie d'un embout saillant destiné à recevoir un couvercle et fermé par une paroi terminale présentant un trou pour la sortie du produit contenu dans le corps creux.

Un tel corps creux et son procédé de réalisation sont connus du document FR-A- 1 066 799.

Cependant, quelle que soit la réalisation des corps creux du type ci-dessus actuellement sur le marché, la paroi terminale de l'embout saillant de leur tête est soit strictement plane soit présente une forme tronconique convexe.

Du fait de la constitution ci-dessus de la paroi terminale de l'embout saillant, lors de l'utilisation du corps creux, un excès du produit contenu dans le corps creux est amené à déborder et à se répartir autour de l'embout saillant et notamment sur les filets de vissage du couvercle, ce qui est ni hygiénique par exemple pour une pâte dentifrice ou une crème à usage de cosmétologie, ni pratique par exemple pour un mastic.

La présente invention a pour but de supprimer les inconvénients précités.

Conformément à l'invention, le corps creux, réalisé de préférence en matière plastique, est composé d'une jupe de section cylindrique, ovale ou autre, cette section étant constante ou variable, et d'une tête munie d'un embout saillant destiné à recevoir un couvercle ou un capuchon et fermé par une paroi terminale, caractérisé en ce que cette paroi terminale est une paroi concave rentrante sensiblement en forme de cuvette.

L'invention s'étend également au procédé de réalisation d'un tel corps creux et qui présente deux variantes selon que le corps creux est réalisé par assemblage d'une jupe extrudée et d'une tête injectée, ou que le corps creux est réalisé de façon monobloc en une seule pièce par injection.

Le procédé de réalisation du corps creux est, selon la première variante de réalisation, caractérisé en ce qu'il consiste à mouler par injection la tête du corps creux en utilisant un moule constitué d'une empreinte et d'un noyau fixes, l'extrémité terminale du noyau est en forme de paroi concave rentrante, de préférence conique, tandis que l'empreinte est pourvue d'une paroi de forme coaxialement conjuguée à la paroi concave rentrante du noyau. Dans un mode de réalisation, l'injection se fait du côté de l'empreinte, au centre du cône saillant.

Dans la seconde variante de réalisation du procédé ci-dessus, le moule est formé d'un noyau fixe destiné à réaliser la jupe du corps creux et d'une empreinte fixe destinée à réaliser la tête, la face interne de l'embout saillant étant réalisé au moyen d'un noyau mobile rétractable dans le noyau fixe, l'extrémité terminale du noyau mobile étant en forme de paroi concave rentrante, de préférence conique, tandis que l'empreinte est pourvue d'une paroi de forme coaxialement conjuguée à la paroi concave rentrante du noyau rétractable, de sorte que, pendant la phase d'injection de la jupe, le noyau mobile est en appui sur l'empreinte et que, dans un deuxième temps, le noyau mobile se rétracte pour permettre l'injection de matière devant former la paroi terminale concave. Dans un mode de réalisation, l'injection de matière se fait du côté de l'empreinte, soit au centre du cône saillant, soit en plusieurs joints à la périphérie de ce cône.

Selon une caractéristique supplémentaire de l'invention, l'empreinte présente un cône saillant dont l'angle au sommet est compris entre 90° et 170° et de préférence compris entre 130° et 160°.

L'invention sera mieux comprise et d'autres buts, caractéristiques, détails et avantages de celle-ci apparaîtront plus clairement de la description explicative qui va suivre faite en référence aux dessins schématiques annexés donnés uniquement à titre d'exemples illustrant un mode de réalisation de l'invention et sur lesquels :
la Fig. 1 est une vue en perspective d'un corps creux réalisé conformément à l'invention ;
la Fig. 2 est une vue en coupe du corps creux de la Fig. 1 ;
la Fig. 3 est une vue partielle agrandie de la Fig. 2 selon une première forme de réalisation de l'invention, avant perçage de l'embout ;
la Fig. 4 est une vue semblable à la Fig. 3 d'une seconde forme de réalisation de l'invention, avant perçage de l'embout ;
la Fig. 5 montre de manière schématique un moule permettant de réaliser, par injection, la tête du corps creux de la Fig. 3 ;
les Figs. 6A et 6B montrent de manière également schématique un moule permettant de réaliser, par injection, l'ensemble du corps creux de la fig. 4 ;
la Fig. 7 montre une variante de réalisation du moule des figures précédentes ;
la Fig. 8 est une vue schématique en coupe selon la ligne VIII-VIII de la Fig. 9 et illustre l'injection du matériau dans le moule ;
la Fig. 9 est une vue en perspective illustrant l'écoulement du matériau dans le moule lors de l'injection ; et
la Fig. 10 est une vue schématique démontrant un mode de réalisation avantageux des canaux d'alimentation.

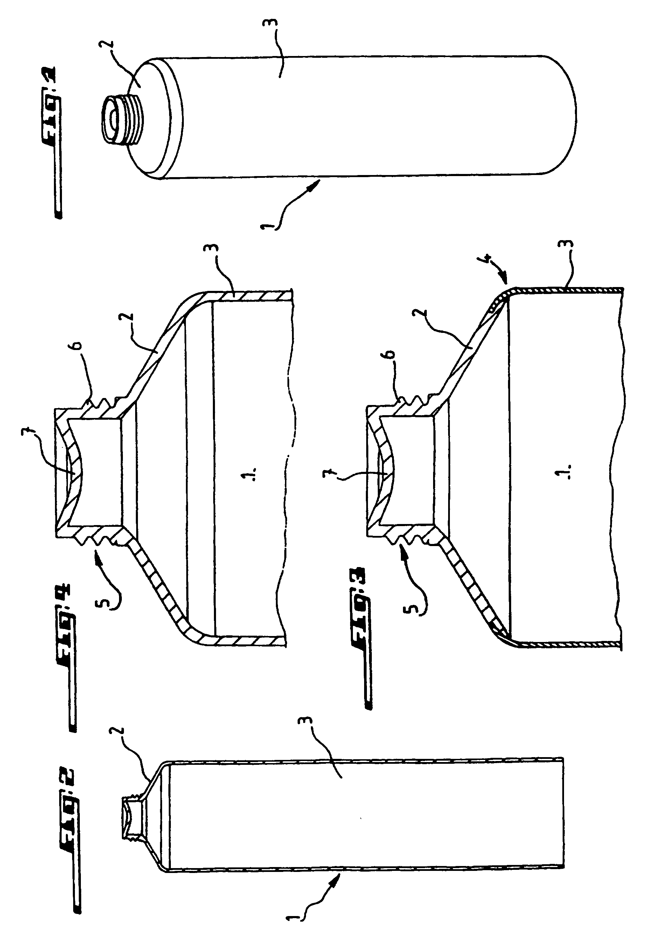

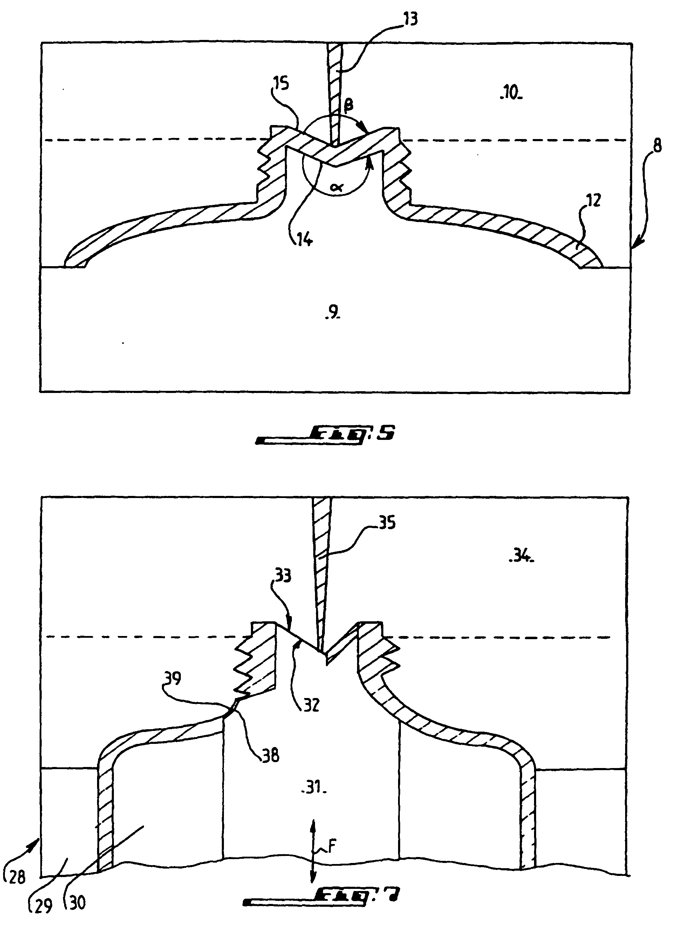

Aux dessins, et notamment aux Fig. 1 et 2, on a représenté un corps creux 1 comprenant une tête 2 et une jupe 3. La jupe représentée sur les figures 1 et 2 est cylindrique. Elle peut avantageusement être de section ovale ou autre, cette section étant elle-même constante ou variable.

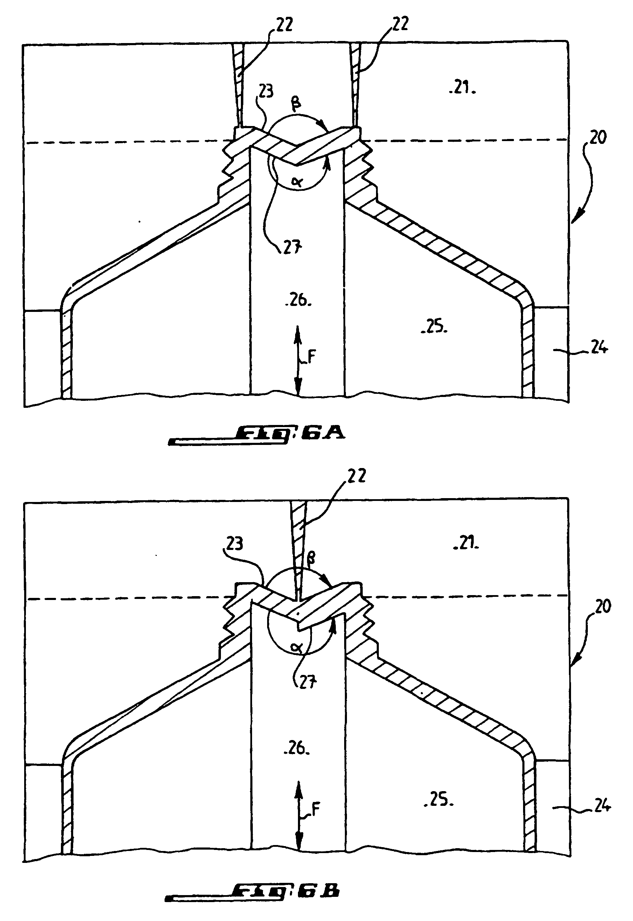

À la Fig. 3, qui représente un premier mode de réalisation du corps creux 1, la tête 2 est une tête en général réalisée par injection, tandis que la jupe 3 est une jupe souple obtenue par exemple par extrusion ou coextrusion d'un film mono ou multicouches transformé en un cylindre par soudage du film selon une génératrice du cylindre. La jupe souple 3 peut également être obtenue directement par extrusion ou coextrusion d'un cylindre mono ou multicouches. La tête 2 et la jupe 3 sont réunies par soudure ou surmoulage, et on a représenté en 4 la zone de soudure ou de surmoulage de la tête 2 sur la jupe 3.

De manière connue, la tête 2 est munie d'un embout saillant 5 présentant un filetage 6. Le filetage 6 est destiné à recevoir un couvercle non représenté du type capsule, canule ou autre, et l'embout 5 est fermé par une paroi terminale 7 destinée à être ensuite percée en son centre pour permettre la distribution d'un produit pâteux du type produit pharmaceutique, dentifrice, crème pour la cosmétologie, produit alimentaire, graisse, colle, mastic ou autre, conditionné dans le tube après sa fabrication.

Le filetage 6 peut être avantageusement remplacé par un encliquetage ou tout autre système, non représenté, d'accroche du couvercle.

Conformément à l'invention, la paroi terminale 7 de l'embout saillant 5 est concave sensiblement en forme de cuvette.

Comme on le voit aux dessins, la paroi terminale 7 présente ainsi une forme concave rentrante qui peut être facilement nettoyée avec le doigt de l'utilisateur. En effet, la cuvette a alors par construction une forme conjuguée à l'extrémité du doigt de l'utilisateur qui peut ainsi récupérer commodément tout excès de produit sans provoquer de souillure périphérique.

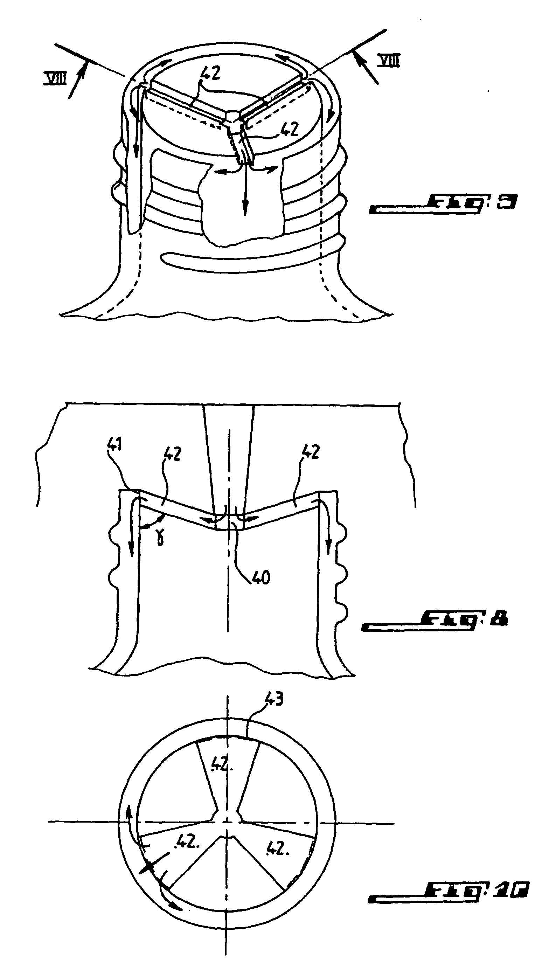

À la Fig. 5, on a représenté de manière générale en 8 un moule destiné à la réalisation de la tête 2 de la Fig. 3 et qui est constitué d'un noyau 9 et d'une empreinte 10.

Le noyau 9 et l'empreinte 10 délimitent entre eux un espace 12 correspondant à la forme devant être donnée à la tête 2.

Au dessin l'empreinte 10 présente en son centre un injecteur 13 permettant d'acheminer la matière plastique jusqu'à l'espace 12 et ainsi former la tête 2.

De manière que la partie terminale 7 présente la forme d'une cuvette, l'embout 14 du noyau 9 qui constitue son extrémité terminale est en forme de paroi concave rentrante, de préférence en forme de cône, dont les génératrices délimitent un angle au sommet α compris entre 190° et 270°, de préférence compris entre 200 et 230°. De même, l'empreinte 9 est pourvue d'une paroi 15 de forme coaxialement conjuguée à la paroi concave rentrante de l'embout 14 du noyau 9. Les génératrices de la paroi 15, aux dessins en forme de cône saillant, délimitent ainsi un angle au sommet β complémentaire de l'angle α et donc compris entre 90 et 170°, de préférence compris entre 130° et 160°, ce qui donne une forme ergonomique à la cuvette de la partie terminale 7.

Dans la réalisation ci-dessus, l'empreinte et le noyau sont fixes au moment de l'injection de matière entre les parois du moule. Pendant cette opération, le noyau ne subit aucune poussée latérale. L'injection se fait en effet dans le plan central de manière analogue à la fabrication d'une pièce de monnaie, et aucune précaution particulière ne doit être prise.

Si, au contraire, on désire mouler par injection l'ensemble du corps creux ou tube 1 c'est-à-dire, conformément à la Fig. 4, la tête 2, qui est d'ailleurs analogue à la tête de la Fig. 3 et dont les éléments constitutifs portent les mêmes références, et la jupe 3, d'une seule pièce, un noyau de moulage réalisé conformément au noyau 9 de la Fig. 5 pourrait subir un décentrage imputable à la poussée latérale résultant d'un flot préférentiel éventuel lors de l'injection de la matière dans le moule.

Par ailleurs, la matière d'injection utilisée est une matière extrêmement visqueuse afin de résister aux efforts de fissuration sous contrainte ou "stress-cracking".

L'injection de matière se faisant très rapidement, il est nécessaire de maintenir à ce moment le noyau exactement centré par rapport à l'empreinte et donc au moule, sous peine de voir le noyau fléchir sous le choc de l'injection.

Aux Fig. 6A et 6B, on a représenté de manière partielle en 20 un moule destiné à la réalisation par injection de l'ensemble du corps creux selon l'invention.

Aux dessins, le moule 20 comprend une empreinte 21 analogue à l'empreinte 10 de la Fig. 5. À ce sujet, les Fig. 6A et 6B se distinguent l'une de l'autre simplement par le dispositif d'injection placé, à la Fig. 6A, à la périphérie du cône saillant (injection multipoint) et placé, à la Fig. 6B, au centre du cône saillant (injection monopoint).

De manière à tenir compte de ce qui précède concernant la difficulté de mouler par injection l'ensemble d'un corps creux allongé, le noyau 24 du moule 20 des Fig. 6A et 6B se compose, d'une part, d'un noyau fixe 25 pour assurer le moulage de la jupe 3 du corps creux et, d'autre part, d'un noyau mobile 26 rétractable dans le noyau fixe 25 dans la direction de la flèche F. En outre, aux dessins, l'extrémité terminale 27 du noyau mobile 26, qui est semblable à l'extrémité terminale 14 du noyau 9 de la Fig. 5, est en forme de surface conique rentrante tandis que la partie terminale de l'empreinte 21 est pourvue du cône saillant 23 également identique au cône saillant 15 et qui permet de former l'embout saillant 5 du corps creux et notamment sa partie terminale 7.

L'injection s'effectue alors en deux phases.

Dans une première phase, le noyau rétractable 26 est en appui sur l'empreinte 21 et les injecteurs 22 remplissent la tête et la jupe directement (Fig. 6A) ou par plusieurs canaux d'alimentation (Fig. 6B).

Dans une seconde phase, le noyau mobile 26. se rétracte et constitue alors, avec l'empreinte 21, une cavité qui est à son tour remplie de matière pour former la paroi terminale 7 en forme de cuvette.

Du fait de la réalisation ci-dessus, le noyau 24 est maintenu exactement centré par rapport à l'empreinte 21 du moule 20 par l'intermédiaire du noyau mobile rétractable 26 dont l'extrémité terminale 27 en forme de cône inversé est en appui sur le cône saillant 23 de l'empreinte pendant la phrase d'injection de la tête et de la paroi.

Le noyau rétractable 26 évite un décentrage de l'ensemble du noyau 24 par rapport au moule 20 sous l'effet du choc de l'injection ou d'un courant préférentiel de la matière.

On réalise ainsi un ajustage conique de très grande précision et on obtient un tube monobloc bénéficiant d'une extrémité d'embout en forme de cuvette et réalisé sans pièce rapportée.

Au cours d'une opération ultérieure, la partie terminale 7 en forme de cuvette est perforée d'un trou présentant un diamètre correspondant au produit conditionné dans le tube par la partie de jupe opposée qui est ensuite fermée par soudage.

Dans un autre mode de réalisation, non représenté, le plan de joint entre le noyau et l'empreinte est déporté depuis la ligne de raccord entre la tête et la jupe jusqu'au bas de la jupe, l'empreinte enveloppant le noyau sur toute la hauteur de la jupe. La présente invention s'applique dans les mêmes conditions à ce mode de réalisation qui permet de réaliser une jupe à section variable (génératrices non parallèles).

Enfin, dans un dernier mode de réalisation également représenté à la Fig. 7, l'appui central de l'extrémité terminale 32 du noyau rétractable 31 sur l'empreinte 34 peut également être complété de crans d'appui 38 dans l'arrondi 39 formant l'angle de raccord entre la tête et l'embout du tube. Ce mode de réalisation est particulièrement avantageux si la section de l'embout est insuffisante pour assurer le maintien du centrage du noyau dans la première phase d'injection.

Il ressort de la description qui vient d'être faite que l'invention permet d'obtenir un tube monobloc, c'est-à-dire réalisé en une pièce, sans lignes de soudure sur la jupe, tout en conservant l'appui indispensable du noyau sur le reçu de buse pendant la phase d'injection du matériau plastique.

Ce résultat est obtenu en plaçant le point d'injection 40 dans un plan situé en dessous de la partie supérieure de la tête du tube au point de raccord 41 entre un canal d'alimentation 42 et la tête du tube, comme cela est clairement montré sur la Fig. 8. En effet, en plaçant le point d'injection ainsi dans un plan situé en dessous de la partie sommitale de la tête du tube, le flot du matériau injecté parcourt un chemin caractérisé par un angle γ inférieur à 90°. Le matériau injecté vient par conséquent percuter la paroi du moule destiné à réaliser le flanc de la partie supérieure de la tête du tube, ce qui favorise un parcours d'écoulement circulaire, c'est-à-dire annulaire, de la matière injectée, conformément aux flèches dessinées sur la Fig. 9. Afin d'améliorer encore l'écoulement annulaire du matériau injecté, il est avantageux de faire en sorte que la ligne de raccord notée 43 en traits interrompus entre les canaux radiaux d'injection 42 et la partie supérieure de la tête du tube soit aussi large que possible, comme cela est montré sur la Fig. 10. A cette fin, les canaux radiaux présentent une largeur qui augmente depuis le point d'injection dans la direction radiale jusqu'à atteindre une largeur maximale dans la zone de raccordement à la paroi de la tête, pour conserver une surface d'appui maximale du noyau sur l'empreinte. Une autre caractéristique avantageuse de invention réside dans le fait que la tête présente une zone d'étranglement annulaire en dessous de la zone de raccordement de chaque canal radial au sommet de la tête, dans le but de favoriser encore l'alimentation annulaire. Il est avantageux, dans le cadre de l'invention, de faire en sorte que les largeurs de raccordement cumulées des canaux d'alimentation représentent au moins 15% du périmètre, avantageusement plus de 25% du périmètre de la partie supérieure de la tête.

## Revendications

1. Corps creux, réalisé de préférence en matière plastique, composé d'une jupe (3) de section cylindrique, ovale ou autre, et d'une tête (2) munie d'un embout saillant (5) destiné à recevoir un couvercle ou un capuchon et fermé par une paroi terminale (7), **caractérisé en ce que** la paroi terminale (7) est une paroi concave rentrante sensiblement en forme de cuvette.

2. Corps creux selon la revendication 1, **caractérisé en ce que** le corps est un corps monobloc.

3. Corps creux selon l'une des revendications 1 ou 2, **caractérisé en ce que** la paroi terminale est une paroi conique.

4. Corps creux selon l'une des revendications 1 à 3, **caractérisé en ce que** son trou d'évacuation est pratiqué dans la paroi terminale (7) après la réalisation de celle-ci.

5. Corps creux selon l'une des revendications 1 à 4, **caractérisé en ce que** sa section transversale est variable dans sa direction axiale.

6. Procédé de réalisation du corps creux selon l'une des revendication 1 à 5, **caractérisé en ce qu'**il consiste à mouler par injection la tête (2) du corps creux (1) en utilisant un moule (8) constitué d'une empreinte (10) et d'un noyau (9) fixes, l'extrémité terminale (14) du noyau (9) est en forme de paroi concave rentrante, de préférence conique, tandis que l'empreinte (10) est pourvue d'une paroi (15) de forme coaxialement conjuguée à la paroi concave rentrante (14) du noyau (9).

7. Procédé de réalisation du corps creux selon l'une des revendication 1 à 5, **caractérisé en ce qu'**il consiste à réaliser le corps creux en une seule pièce par moulage par injection en utilisant un moule (20) formé d'un noyau fixe (25) destiné à réaliser la jupe (3) du corps creux et d'une empreinte fixe (21) destinée à réaliser la tête (2), la face interne de l'embout saillant (5) étant réalisée au moyen d'un noyau mobile (26) rétractable dans le noyau fixe, l'extrémité terminale (27) du noyau mobile (26) étant en forme de paroi concave rentrante, de préférence conique, tandis que l'empreinte (21) est pourvue d'une paroi (23) de forme coaxialement conjuguée à la paroi concave rentrante (27) du noyau rétractable (26), de sorte que, pendant la phase d'injection de la jupe (3), le noyau mobile (26) est en appui sur l'empreinte (21) et que, dans un deuxième temps, le noyau mobile (26) se rétracte pour permettre l'injection de matière devant former la paroi terminale concave (7).

8. Procédé selon la revendication 6 ou 7, **caractérisé en ce que** l'empreinte (10 ; 21) présente un cône saillant (15 ; 23) dont l'angle au sommet β est compris entre 90° et 170 °, de préférence compris entre 130° et 160°.

9. Procédé selon l'une des revendication 6 à 8, **caractérisé en ce que** l'injection de la matière se fait par l'empreinte (10, 21), au centre du cône (15, 23) formant la cuvette.

10. Procédé selon la revendication 7, **caractérisé en ce que** l'injection de la matière se fait par l'empreinte (21) en plusieurs points à la périphérie du cône (23).

11. Procédé selon l'une des revendications 6 à 10, **caractérisé en ce que** le plan de joint entre le noyau et l'empreinte est déporté depuis la ligne de raccord entre la tête et la jupe jusqu'au bas de la jupe, l'empreinte enveloppant le noyau sur toute la hauteur de la jupe.

12. Procédé selon l'une des revendications 6 à 11, **caractérisé en ce que** le noyau mobile (31) dispose de crans d'appui (38) sur l'empreinte (34) dans l'arrondi (39) assurant la liaison de l'embout avec le reste de la tête.

13. Procédé selon l'une des revendications 6 à 9 ou 11, **caractérisé en ce que** le point d'injection (40) de la matière plastique dans le moule est situé dans un plan en dessous des raccords (41) des canaux d'alimentation (42) à la tête de tube.

14. Procédé selon l'une des revendications 6 à 9 ou 11 ou 13, **caractérisé en ce que** l'on prévoit dans l'extrémité terminale concave rentrante (27) des canaux d'alimentation (42) qui présentent une largeur qui augmente depuis le point d'injection dans la direction radiale jusqu'à atteindre une largeur maximale dans la zone de raccordement à l'embout saillant (5).

15. Procédé selon l'une des revendications 6 à 9 ou 11 ou 13 ou 14, **caractérisé en ce que** l'on prévoit un étranglement annulaire dans la zone destinée à former l'embout saillant (5) en dessous de la zone de raccordement (41) de chaque canal radial (42) au sommet de l'embout (5).

16. Procédé selon la revendication 14, **caractérisé en ce que** les largeurs de raccordement cumulées des canaux d'alimentation représentent au moins 15% du périmètre avantageusement plus de 25% du périmètre de la partie supérieure de l'embout saillant (5).

## Patentansprüche

1. Hohlkörper, bevorzugt aus Kunststoff hergestellt, bestehend aus einem Mantel (3) mit zylindrischem, ovalem oder sonstigem Querschnitt und einem Kopf (2), der mit einem vorstehenden Ansatz (5) versehen ist, der dazu gedacht ist, einen Deckel oder eine Kappe aufzunehmen, und von einer Ausgangswand (7) verschlossen wird, **dadurch gekennzeichnet, dass** die Ausgangswand (7) eine im Wesentlichen schalenförmige, einspringende konkave Wand ist.

2. Hohlkörper nach Anspruch 1, **dadurch gekennzeichnet, dass** der Körper ein Körper aus einem Stück ist.

3. Hohlkörper nach einem der Ansprüche 1 oder 2, **dadurch gekennzeichnet, dass** die Ausgangswand eine kegelförmige Wand ist.

4. Hohlkörper nach einem der Ansprüche 1 bis 3, **dadurch gekennzeichnet, dass** seine Ablassöffnung in der Ausgangswand (7) nach ihrer Herstellung angebracht wird.

5. Hohlkörper nach einem der Ansprüche 1 bis 4, **dadurch gekennzeichnet, dass** sein Querschnitt in seiner Axialrichtung variabel ist.

6. Verfahren zur Herstellung des Hohlkörpers nach einem der Ansprüche 1 bis 5, **dadurch gekennzeichnet, dass** es darin besteht, den Kopf (2) des Hohlkörpers (1) unter Verwendung einer Form (8), die aus einem feststehenden Hohlraum (10) und einem feststehenden Kern (9) besteht, zu verspritzen, wobei das Ausgangsende (14) des Kerns (9) die Form einer einspringenden konkaven, bevorzugt kegelförmigen Wand aufweist, während der Hohlraum (10) mit einer Wand (15) ausgestattet ist, deren Form koaxial der einspringenden konkaven Wand (14) des Kerns (9) zugeordnet ist.

7. Verfahren zur Herstellung des Hohlkörpers nach einem der Ansprüche 1 bis 5, **dadurch gekennzeichnet, dass** es darin besteht, den Hohlkörper aus einem Stück durch Spritzgießen unter Verwendung einer Form (20), die aus einem feststehenden Kern (25), der dazu gedacht ist, den Mantel (3) des Hohlkörpers herzustellen, und einem feststehenden Hohlraum (21), der dazu gedacht ist, den Kopf (2) herzustellen, gebildet ist, zu verspritzen, wobei die Innenseite des vorspringenden Ansatzes (5) mittels eines beweglichen Kerns (26), der in den feststehenden Kern einziehbar ist, hergestellt wird, wobei das Ausgangsende (27) des beweglichen Kerns (26) die Form einer einspringenden konkaven, bevorzugt kegelförmigen Wand aufweist, während der Hohlraum (21) mit einer Wand (23) ausgestattet ist, deren Form koaxial der einspringenden konkaven Wand (27) des einziehbaren Kerns (26) zugeordnet ist, so dass während der Spritzphase des Mantels (3) der bewegliche Kern (26) sich auf dem Hohlraum (21) abstützt, und dass sich der bewegliche Kern (26) daraufhin zurückzieht, um das Spritzen des Materials zu ermöglichen, das die konkave Ausgangswand (7) bilden soll.

8. Verfahren nach Anspruch 6 oder 7, **dadurch gekennzeichnet, dass** der Hohlraum (10; 21) einen vorstehenden Kegel (15; 23) aufweist, dessen Winkel am Scheitelpunkt β zwischen 90° und 170°, bevorzugt zwischen 130° und 160°, liegt.

9. Verfahren nach einem der Ansprüche 6 bis 8, **dadurch gekennzeichnet, dass** das Materialspritzen durch den Hohlraum (10, 21) in der Mitte des die Schale bildenden Kegels (15, 23) erfolgt.

10. Verfahren nach Anspruch 7, **dadurch gekennzeichnet, dass** das Materialspritzen durch den Hohlraum (21) an mehreren Stellen auf dem Umfang des Kegels (23) erfolgt.

11. Verfahren nach einem der Ansprüche 6 bis 10, **dadurch gekennzeichnet, dass** die Formteilfläche zwischen dem Kern und dem Hohlraum von der Schmelzlinie zwischen dem Kopf und dem Mantel bis zum Unterteil des Mantels verlagert ist, wobei der Mantel den Kern über die gesamte Höhe des Mantels hin umhüllt.

12. Verfahren nach einem der Ansprüche 6 bis 11, **dadurch gekennzeichnet, dass** der bewegliche Kern (31) in der Abrundung (39), welche die Verbindung des Ansatzes mit dem Rest des Kopfes sicherstellt, über Rastkerben (38) auf dem Hohlraum (34) verfügt.

13. Verfahren nach einem der Ansprüche 6 bis 9 oder 11, **dadurch gekennzeichnet, dass** der Anschnitt (40) des Kunststoffes in der Form sich in einer Ebene unter den Anschlüssen (41) der Zuführkanäle (42) am Tubenkopf befindet.

14. Verfahren nach einem der Ansprüche 6 bis 9 oder 11 oder 13, **dadurch gekennzeichnet, dass** in dem einspringenden, konkaven Ausgangsende (27) Zuführkanäle (42) vorgesehen sind, die eine Breite aufweisen, die von dem Anschnitt in Radialrichtung zunimmt, bis sie in dem Anschlussbereich an den vorstehenden Ansatz (5) eine Höchstbreite erreicht.

15. Verfahren nach einem der Ansprüche 6 bis 9 oder 11 oder 13 oder 14, **dadurch gekennzeichnet, dass** eine ringförmige Verengung in dem Bereich vorgesehen ist, der dazu gedacht ist, den vorstehenden Ansatz (5) unter dem Anschlussbereich (41) jedes Radialkanals (42) am Scheitelpunkt des Ansatzes (5) zu bilden.

16. Verfahren nach Anspruch 14, **dadurch gekennzeichnet, dass** die summierten Anschlussbreiten der Zuführkanäle mindestens 15 % des Umfangs, vorteilhaft mehr als 25 % des Umfangs des Oberteils des vorstehenden Ansatzes (5) darstellen.

## Claims

1. A hollow body, preferably made in plastic, consisting of a skirt (3) with a cylindrical, oval or other section, and of a head (2) provided with a protruding end piece (5) for receiving a lid or cap and closed by an end wall (7), **characterized in that** the end wall (7) is a substantially cup-shaped re-entrant concave wall.

2. The hollow body according to claim 1, **characterized in that** the body is a one-piece body.

3. The hollow body according to any of claims 1 or 2, **characterized in that** the end wall is a conical wall.

4. The hollow body according to any of claims 1 to 3, **characterized in that** its discharge hole is provided in the end wall (7) after the making of the latter.

5. The hollow body according to any of claims 1 to 4, **characterized in that** its cross-section is variable in its axial direction.

6. A method for making the hollow body according to any of claims 1 to 5, **characterized in that** it consists of injection-molding the head (2) of the hollow body (1) by using a mold (8) consisting of a fixed mold impression (10) and core (9), the terminal end (14) of the core (9) has the shape of a re-entrant, preferably conical concave wall, whereas the mold impression (10) is provided with a wall (15) having a shape co-axially conjugate to the re-entrant concave wall (14) of the core (9).

7. A method for making the hollow body according to any of claims 1 to 5, **characterized in that** it consists of making the hollow body in a single piece by injection molding, by using a mold (20) formed with a fixed core (25) for making the skirt (3) of the hollow body and with a fixed mold impression (21) for making the head (2), the internal face of the protruding end piece (5) being made by means of a retractable mobile core (26) in the fixed core, the terminal end (27) of the mobile core (26) having the shape of a re-entrant, preferably conical concave wall, whereas the mold impression (21) is provided with a wall (23) having a shape co-axially conjugate to the re-entrant concave wall (27) of the retractable core (26), sc that during the injection phase of the skirt (3), the mobile core (26) presses against the mold impression (21) and that in a second phase, the mobile core (26) retracts allowing injection of material which should form the concave end wall (7).

8. The method according to claim 6 or 7, **characterized in that** the mold impression (10; 21) has a protruding cone (15; 23), the apical angle β of which is between 90° and 170°, preferably between 130° and 160°.

9. The method according to any of claims 6 to 8, **characterized in that** injection of the material is made through the mold impression (10, 21) at the center of the cone (15, 23) forming the cup.

10. The method according to claim 7, **characterized in that** injection of the material is made through the mold impression (21) at several points on the periphery of the cone (23).

11. The method according to any of claims 6 to 10, **characterized in that** the joining plane between the core and the mold impression is offset from the connecting line between the head and the skirt to the bottom of the skirt, the mold impression surrounding the core over the entire height of the skirt.

12. The method according to any of claims 6 to 11, **characterized in that** the mobile core (31) has supporting notches (38) on the mold impression (34) in the rounded form (39) providing the connection of the end piece with the remainder of the head.

13. The method according to any of claims 6 to 9 or 11, **characterized in that** the injection point (40) of the plastic material in the mold is located in a plane below the fittings (41) of the feeding channels (42) to the tube head.

14. The method according to any of claims 6 to 9 or 11 or 13, **characterized in that** in the re-entrant concave terminal end (27), feeding channels (42) are provided, which have a width which increases from the injection point in the radial direction until reaching a maximum width in the connecting area to the protruding end piece (5).

15. The method according to any of claims 6 to 9 or 11 or 13 or 14, **characterized in that** an annular constriction is provided in the area intended to form the protruding end piece (5) below the connecting area (41) of each radial channel (42) to the top of the end piece (5).

16. The method according to claim 14, **characterized in that** the cumulated connecting widths of the feeding channels account for at least 15% of the perimeter, advantageously more than 25% of the perimeter of the upper portion of the end piece (5).
